(19) Europäisches Patentamt / European Patent Office / Office européen des brevets

(11) **EP 4 787 206 A1**

(12) **EUROPEAN PATENT APPLICATION**

(43) Date of publication:
**05.08.2026 Bulletin 2026/32**

(21) Application number: **26154706.1**

(22) Date of filing: **28.01.2026**

(51) International Patent Classification (IPC):
**G06F 21/55** (2013.01)   **H04L 9/40** (2022.01)
**H04L 67/12** (2022.01)

(52) Cooperative Patent Classification (CPC):
**H04L 63/1416; G06F 21/552; G06F 21/554;
H04L 63/1425;** H04L 67/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.01.2025 US 202519039901**

(71) Applicant: **Cymotive Technologies Ltd.
6789139 Tel Aviv (IL)**

(72) Inventor: **SHUBOV, Eugene
7174834 Modiin (IL)**

(74) Representative: **Fezzardi, Antonio et al
Studio Ferrario Srl
Via Collina, 36
00187 Roma (IT)**

(54) **SYSTEMS AND METHODS FOR PLATFORM AGNOSTIC DISTRIBUTED INTRUSION DETECTION**

(57)    Presented herein are methods and systems describing distributed intrusion detection system architectures that, in one embodiment, include one or more network sensors; one or more intrusion detection agents; an intrusion detection proxy; and rules logic distributed across the one or more intrusion detection agents and the intrusion detection proxy; wherein the rules logic is configured to be executed within an isolated computing environment. Other non-limiting embodiments are described and claimed herein.

FIG. 1

**Description**

Field of the Invention:

The present application relates to monitoring or scanning of software or data including attack detection; systems, methods, and apparatuses for ensuring data integrity by scanning of software or data or otherwise monitoring data to detect attacks, including means to sense the presence of an intruder. For example, G06F 21/566 Intrusion detection, or H04W 24/00 Network monitoring to detect or protect against malicious traffic.

**SUMMARY**

This application relates to cybersecurity systems and methods for intrusion detection and remediation. In one embodiment, a system includes a distributed intrusion detection system architecture comprising one or more network sensors; one or more intrusion detection agents; an intrusion detection proxy; and rules logic distributed across the one or more intrusion detection agents and the intrusion detection proxy; wherein the rules logic is configured to be executed within an isolated computing environment.

**BRIEF DESCRIPTION OF THE DRAWINGS**

FIG. 1 illustrates a system environment according to the claimed systems and methods, including a distributed intrusion detection system core.

FIG. 2 illustrates an automotive use case system environment according to the claimed systems and methods, including an in-vehicle distributed intrusion detection system.

FIG. 3A illustrates an intrusion detection system core that combines host and network anomaly detection logic.

FIG. 3B shows a table of IDS types with corresponding attack examples and examples of anomalies.

FIG 4. illustrates embodiments of rule types and rule chains according to the claimed systems and methods.

FIG. 5 illustrates an embodiment of the claimed systems and methods in which an IDS agent is deployed on a single electronic control unit (ECU).

FIG. 6 illustrates a platform agnostic abstraction layer embodiment of the claimed systems and methods.

FIG. 7 illustrates an IDS layered communication stack embodiment of the claimed systems and methods.

**BACKGROUND**

Atypical Cyber Attacks

IoT devices usually support industry specific hardware architectures and network protocols (e.g., CAN bus). Cyberattacks inherent to IoT systems differ from those that can be detected by existing IDS solutions.

Monitoring Huge Fleets

When it comes to IoT, there is usually a need to monitor huge fleets of tens of thousands of connected devices. Enterprise solutions existing on the market are only capable of monitoring a few hundred endpoints.

Limited Hardware Resources

Typically, IoT devices have limited resources. This primarily concerns the use of CPU and RAM. Therefore, serious resource consumption restrictions are imposed on any extra software components.

Safety-Critical Environments

Many IoT systems operate in security-critical environments. Any software component must meet security requirements that span the entire software development life cycle. This includes full traceability, testing and software updates.

## DETAILED DESCRIPTION

The instant application describes solutions that address the following aspects of intrusion detection systems:

Complexity of IoT Systems

IoT systems are becoming increasingly complex. A typical IoT system may consist of multiple devices connected to each other. Conventional intrusion detection methods are not sufficient for the IoT world and must take into account the mutual influence of devices on each other.

Network and Host Anomaly Detection

Given the regulatory requirements and complexity of IoT systems, an ideal IDS solution should combine network and host anomaly detection. Current solutions on the market support either host only or network only detection.

Over-the-Air Connectivity

In many cases IoT devices are connected via a cellular network. This imposes certain restrictions on the amount of data reported. Besides, this defines extra requirements for security of communication and over-the-air updates.

Required Flexibility

IDS rules should be decoupled from the rest of the system to enable flexible rules updates. Rules updates can be easily applied and rolled back at convenient times and are considered safer than software patches.

Hardware and Software Architecture Diversity

IoT systems operate on many different hardware architectures, operating systems, and use different communication protocols. The IDS solution should be generic enough (portable and customizable) to support all of them.

Distributed Intrusion Detection System Core

In general, an Intrusion Detection System (IDS) is a software application that monitors a system for malicious activity or policy violations. Any detected activity or violation is typically reported or collected centrally using a Security Operation Center (SOC).

The instant IDS is an anomaly-based intrusion detection system whose purpose is to detect known and unknown attacks. To do that the IDS collects information about the behavior of the monitored system hardware and software components like ECUs, network buses, Ethernet switches, operating systems, hypervisors and applications. This information is gathered by **IDS** Core, where it is checked against predefined rules. To detect more sophisticated attacks the data from IDS Core is forwarded to IDS SOC for further offline investigation.

The **Distributed IDS** Core is intended to monitor complex distributed systems consisting of several heterogenous interconnected units (e.g., ECUs). The Distributed IDS Core consists of multiple components (IDS Sensors, IDS Agents and IDS Proxy) residing on monitored units. Together these components enable comprehensive security for both individual distributed systems (e.g., vehicles) and fleet wide. In the general case, the system relies on bi-directional communication which utilizes a generic communication interface towards the SOC. The interface enables continuous security monitoring, dynamic detection, rules updates and reconfiguring the components during runtime without the need for software modification.

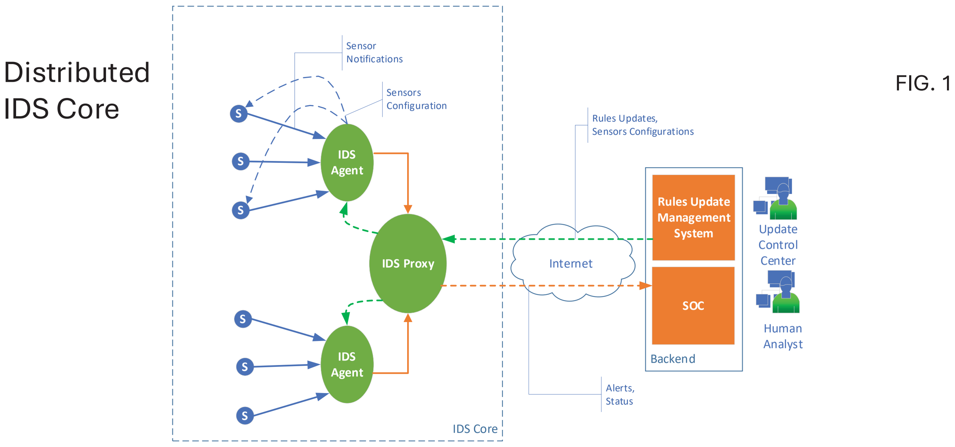

FIG. 1 illustrates an embodiment of a system environment depicting a distributed IDS core, in which the distributed IDS relies on bi-directional communication. The bi-directional communication enables dynamic rules updates and reconfiguring the components during runtime. Unlike software patching, IDS rules updates can be downloaded and applied without modifying the IDS Core software. Rules updates can be easily applied and rolled back at convenient times, and do not affect the IDS Core software executable file. Therefore, rules updates are considered safer than software patches.

**IDS Sensors** are distributed in the relevant physical and virtual monitored computational units (e.g., ECUs) as well as in the infrastructure components (e.g., Ethernet switches) inside the distributed monitored system. Each Sensor collects data from the monitored unit in which it is located and forwards it to an IDS Agent.

**IDS Agents** can perform basic data analysis on the data collected from the sensors to detect anomalies. Notifications about anomalies detected by Agents are forwarded to **IDS Proxy** together with extra context data. Context data (enrichment) can be used by the SOC for deeper investigation.

**IDS Proxy** manages the entire IDS system. It fuses the information collected from IDS Agents and performs full system analysis. Some anomalies can only be detected by cross-referencing data sources coming from different Agents. IDS Proxy collects all data from the Agents that need to be sent to the SOC or logged locally. IDS Proxy is also responsible for creating a secure communication channel over Internet between IDS Core and the SOC. IDS Proxy receives multiple communication packages and handles the transmission to the SOC according to the policy in an efficient manner.

In the general case, the Distributed IDS relies on **bi-directional** communication. The bi-directional communication enables dynamic rules updates and reconfiguring the components during runtime. Unlike software patching, IDS rules updates can be downloaded and applied without modifying the IDS Core software. Rules updates can be easily applied and rolled back at convenient times, and do not affect the software executable file. Therefore, rules updates are considered safer than software patches.

**The Automotive Use Case**

In one example embodiment, a vehicle may contain various digital control units, including engine control units, infotainment controllers, or other IoT nodes. These systems often include the following features:

- A distributed architecture encompassing main and safety-critical computing units of the monitored system.

- A flexible software architecture that is easy to extend or expand.

- A lightweight system that is highly optimized for resource consumption (e.g., CPU and RAM demands), which is crucial for IoT environments.

- Fleet-wide visibility.

- Adaptive traffic control in accordance with a bandwidth allocation policy.

- Dynamic rules updates, including centralized fleet-wide rules updates.

- Secure rule execution.

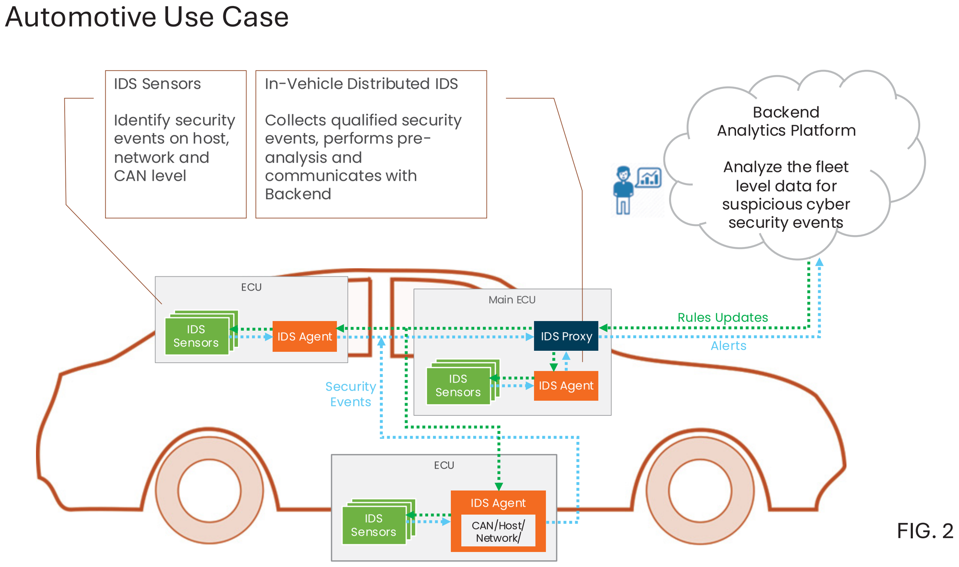

An automotive use case system environment embodiment is depicted in FIG. 2, showing three ECUs, each with a set of IDS sensors and an IDS agent. There is an IDS proxy in the main ECU. The in-vehicle distributed IDS is in communication with a backend analytics platform that analyzes the fleet level data for suspicious cybersecurity events.

IDS Sensors

Sensors identify security events at the host, network, and CAN (control area network) level.

In-Vehicle Distributed IDS

Collects qualified security events, performs pre-analysis and communicates with the backend analytics platform.

Backend Analytics Platform

Analyzes the fleet level data for suspicious cyber security events.

**Combined Host and Network Anomaly Detection Logic**

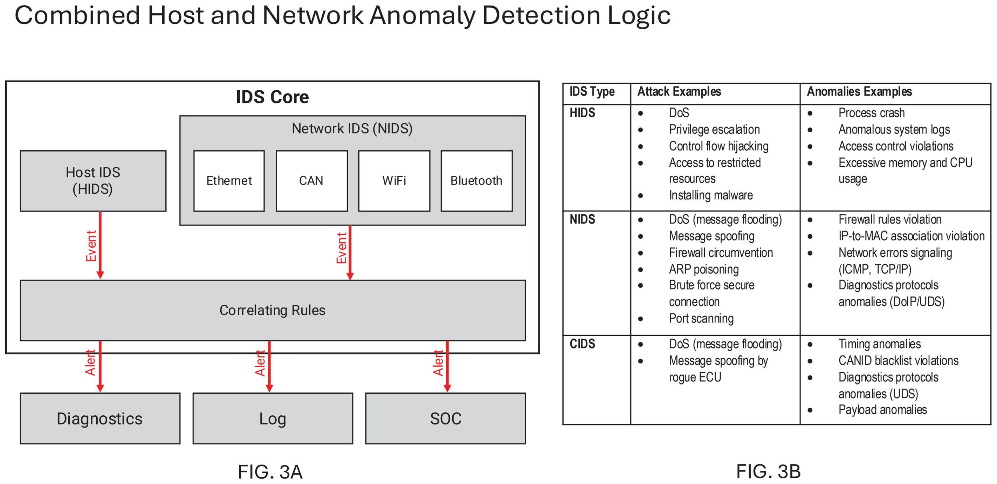

As depicted in FIG. 3A, in its complete case, the IDS Core Rule Engine combines both Host and Network detection rules as well as the correlating rules logic. Network IDS supports all communication layers inherent to the monitored system.

FIG. 3B shows various IDS types (HIDS, NIDS, and CIDS) with corresponding attack examples and anomaly examples. Also shown below in Table 1:

Table 1

| IDS Type | Attack Examples | Anomalies Examples |
|---|---|---|
| **HIDS** | • DoS<br>• Privilege escalation<br>• Control flow | • Process crash<br>• Anomalous system logs<br>• Access control violations |
|  | hijacking<br>• Access to restricted resources<br>• Installing malware | • Excessive memory and CPU usage |
| **NIDS** | • DoS (message flooding)<br><br>• Message spoofing<br>• Firewall circumvention<br>• ARP poisoning<br>• Brute force secure connection<br>• Port scanning | • Firewall rules violation<br>• IP-to-MAC association violation<br><br>• Network errors signaling (ICMP, TCP/IP)<br>• Diagnostics protocols anomalies (DoIP/UDS) |
| **CIDS** | • DoS (message flooding)<br><br>• Message spoofing by rogue ECU | • Timing anomalies<br>• CANID blacklist violations<br>• Diagnostics protocols anomalies (UDS)<br>• Payload anomalies |

### Rule Types and Rule Chains

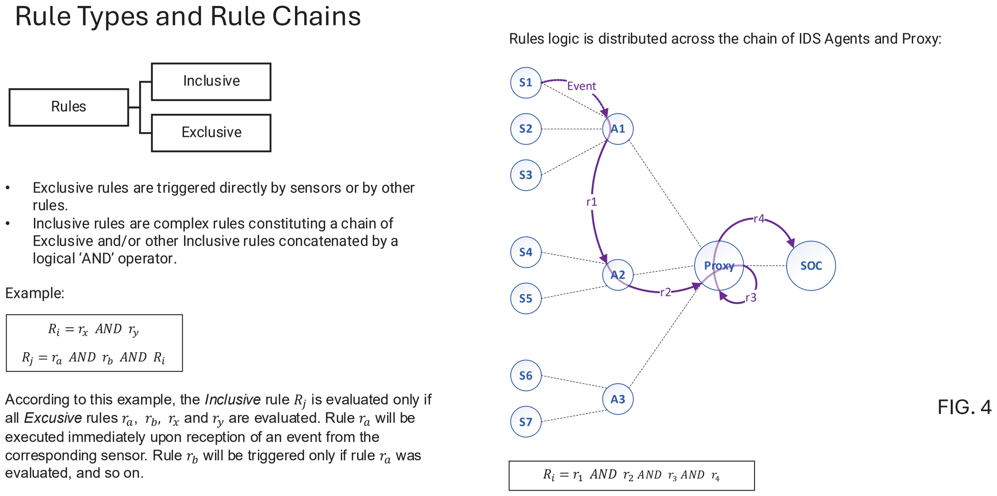

As depicted in FIG. 4, exclusive rules are triggered directly by sensors or by other rules. Inclusive rules are complex rules constituting a chain of Exclusive and/or other Inclusive rules concatenated by a logical 'AND' operator.

Example:

$$R_i = r_x \ AND \ r_y$$
$$R_j = r_a \ AND \ r_b \ AND \ R_i$$

According to the example above, the *Inclusive* rule Rj is evaluated only if all *Excusive* rules $r_a$, $r_b$, $r_x$, and $r_y$ are evaluated. Rule $r_a$ will be executed immediately upon reception of an event from the corresponding sensor. Rule $r_b$ will be triggered only if rule $r_a$ was evaluated, and so on. The rules logic is distributed across the chain of IDS Agents and IDS Proxy.

### Dynamic Rules Updates

After analyzing the reports and alerts from the IDS, SOC analysts may develop an interest in receiving additional information in subsequent reports and alerts. Once they receive new data, they may wish to make further adjustments, and these iterations may occur multiple times. Implementing these iterations through full software upgrades is impractical since such upgrades are infrequent. Instead, these adjustments must be made by configuring the IDS Proxy, IDS Agents, and IDS Sensors or, in more complex cases, by downloading executable scripts that can be interpreted and executed by a script engine integrated into the IDS Agent/Proxy components.

We can consider the following use cases for dynamic IDS rules updates:

**A. Gradual introduction of new features:**

If each new feature can be dynamically activated and deactivated, it becomes possible to introduce these features gradually. Initially, you can enable each new feature only in selected monitored systems. After ensuring that the feature functions as expected, you can then deploy it fleet-wide. Conversely, should a feature malfunction, it can be deactivated via a command from the backend. A procedure of this nature enhances the safety of feature introduction.

**B. Dynamic configuration of anomaly detection algorithm parameters:**

Aggregating reports from multiple monitored systems creates a picture of "normality", comprising sets of statistical distributions for monitored values. When an expected distribution for a specific value is known, any significant deviation can be considered as an anomaly. Analysts can then configure an anomaly threshold for this value. If the threshold is exceeded, the IDS will generate an alert. As additional statistical data becomes available, analysts may decide to reevaluate thresholds configured earlier. This process may involve several iterations before the optimal thresholds are ultimately determined.

**C. Unforeseen critical changes and bug fixes:**

Running the IDS functionality on a script interpreter engine offers a clear advantage: the capability to swiftly implement necessary changes and address bugs. This advantage is valuable for any feature, but it aligns particularly well with the nature of IDS, which involves trial and adjustment of anomaly detection rules. Hence, the ability holds special significance for IDS.

**D. Gathering extra alert enrichment data:**

Analysts may opt to collect specific informational items for analysis. This is primarily due to the inability to anticipate the comprehensive set of informational items that analysts may wish to extract.

**E. Gathering raw data in selected monitored systems (forensic):**

To gather forensic data for subsequent offline processing through advanced statistical analysis and machine learning, analysts may wish to transfer samples of raw traffic from selected monitored systems to the backend. For instance, they can choose to transmit CAN PDUs associated with specific CAN IDs or Ethernet frames that belong to specific protocols. The traffic may be collected over a period of several minutes. Collecting raw data from all monitored systems is cost-prohibitive due to the significant cellular bandwidth consumption. Therefore, this feature becomes practical only when analysts can dynamically select a limited subset of monitored systems from which data is collected.

F. **Restore factory defaults.**

**IDS Agent Deployment on a Single ECU**

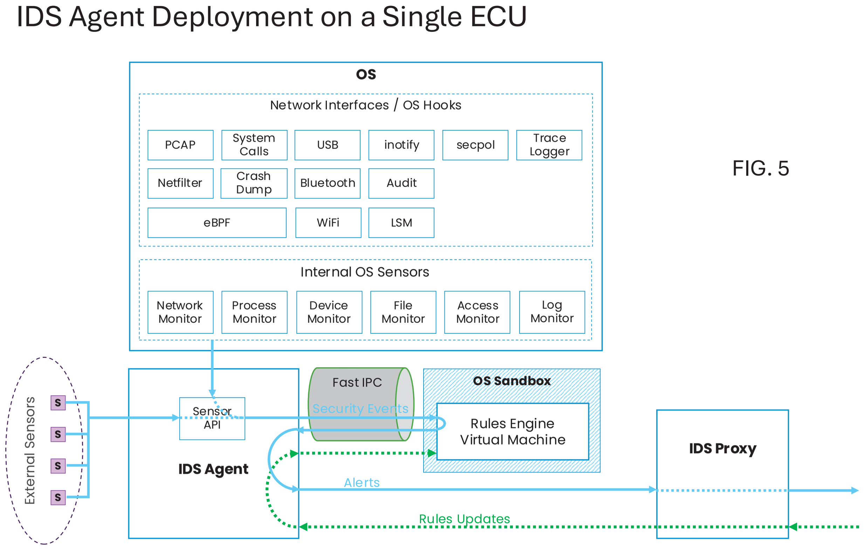

FIG. 5 depicts an embodiment in which the IDS is deployed on a single ECU. A fundamental **security** approach of the herein disclosed IDS architecture is executing IDS rules inside a **sandbox.** The sandbox can prevent an arbitrary rule code from harming functionality of the monitored system. The vulnerable or threatening rule can be downloaded either by mistake or out of malice.
According to the proposed system architecture, the Rules Engine process runs in a sandbox, that takes advantage of a **seccomp** isolation facility. Standing for "secure computing mode," this lets one restrict syscalls that a process can make. As the Rules Engine executes only logical operations, the syscall filter provided to seccomp is very narrow and includes only those syscalls required for implementing inter-process communication (IPC) towards the next in a chain of IDS Agents. As the seccomp syscall filter is narrow, the potential attack surface is reduced to a minimum.
Another vulnerability that can be exploited by the rule code is an exhaustive CPU and/or RAM utilization. This exploitation is prevented by means of **cgroups.** Cgroups (abbreviated from "control groups") is a Linux kernel feature which limits resource usage of a group of processes (e.g., RAM, CPU, network or I/O). To limit CPU utilization of a Rules Engine process, a dedicated cgroup is created with corresponding CPU characteristics.

**Platform Agnostic Abstraction Layer**

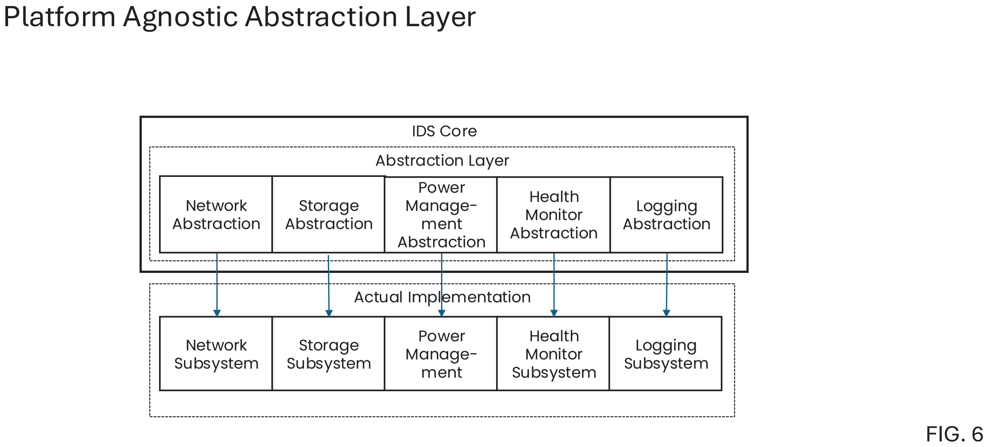

As shown in FIG. 6, the IDS core may include a platform-agnostic abstraction layer, that exists as a layer above actual implementation. For example, a network abstraction may represent a network subsystem; a storage abstraction may represent a storage subsystem; a power management abstraction may represent a power management subsystem; a health monitoring abstraction may represent a health monitoring subsystem; and a logging abstraction may represent a logging subsystem.

**IDS Layered Communication Stack**

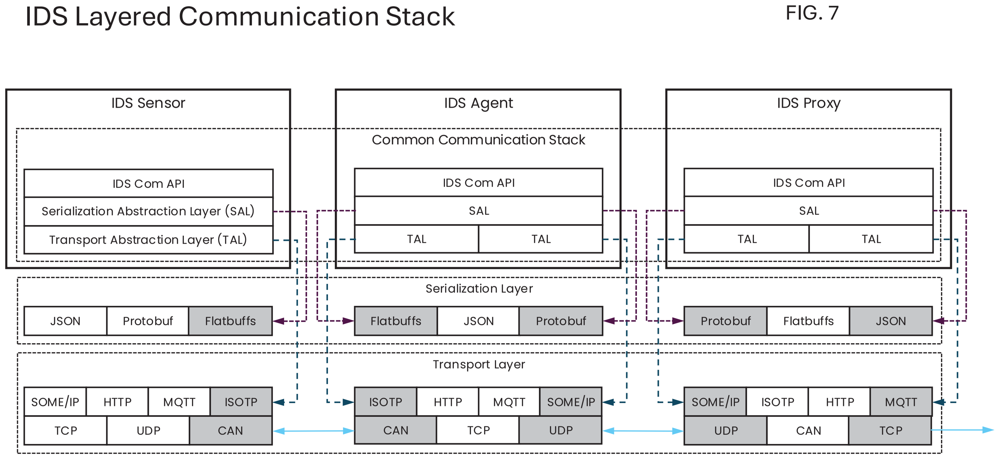

FIG. 7 depicts an embodiment of an IDS-layered communication stack. In this embodiment, all IDS Core components share the same Communication Stack. To allow the maximum flexibility, the Communication Stack is split into several layers. The underlying communication layers may differ from system to system and can even vary between different sensors and IDS Agents. Therefore, the Communication Stack takes advantage of a flexible Transport Abstraction Layer (TAL). The TAL is agnostic to the network architecture of the monitored system and allows flexible deployment of the IDS Core without any modification of arbitrary or various hardware and software platforms. The actual implementation of the transport layer is detached from the IDS Core and should be defined in a separate module (e.g., a shared object). There are, however, several default implementations of the Transport Layer based on SOME/IP, HTTP, MQTT, ISOTP transport protocols typical for most IoT network architectures.

Similar to TAL, IDS Core employs a flexible Serialization Abstraction Layer (SAL). Like the Transport Layer, the Serialization Layer is detached from the IDS Core. It defines a method(s) used by the IDS Core to serialize Security Events and Alerts before sending across the network. By default, IDS Core supports JSON, Protobuf, and Flatbuffers serialization suitable for most use cases.

**Advantages**

Distributed rules execution

Detecting both network and host anomalies

Restricted resource consumption

Secure rules execution in isolated environment

Centralized rules updates

System Elements:

1. Distributed IDS Core architecture including Sensors, IDS Agents, and an IDS Proxy;

2. Rules combine both Network and Host detection logic;

3. IDS Agent and IDS Proxy responsible for centralized dynamic rules updates;

4. Rules logic running in a virtual environment, which allows for the use of the same rules agnostic of the hardware and operating system of different components (micro-controllers);

5. Running rules logic inside an isolated environment (sandbox) to prevent an arbitrary rule code from harming the monitored system;

6. Rules logic distributed across the chain of IDS Agents and Proxy;

7. Rules logic is decoupled from IDS Core which allows the system to update rules without updating the IDS Core;

8. Platform agnostic IDS Core allows flexible system deployment on any/arbitrary hardware and software platform without the need of code changes;

9. Layered communication stack agnostic to the network architecture of the monitored system;

10. Generic API for sensor data collection allows for the deployment of new sensors without the necessity to update the software of IDS Core;

11. Generic abstraction layer agnostic to platform dependent implementation of storage, power management, health monitoring, diagnostics, etc.

Those skilled in the art will appreciate that the foregoing specific exemplary processes and/or devices and/or technologies are representative of more general processes and/or devices and/or technologies taught elsewhere herein, such as in the claims filed herewith and/or elsewhere in the present application.

Those having ordinary skill in the art will recognize that the state of the art has progressed to the point where there is little distinction left between hardware, software, and/or firmware implementations of aspects of systems; the use of hardware, software, and/or firmware is generally a design choice representing cost vs. efficiency tradeoffs (but not always, in that in certain contexts the choice between hardware and software can become significant). Those having ordinary skill in the art will appreciate that there are various vehicles by which processes and/or systems and/or other technologies described herein can be affected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be affected, none of which is inherently superior to the other in that any vehicle to be utilized is a choice dependent upon the context in which the vehicle will be deployed and the specific concerns (e.g., speed, flexibility, or predictability) of the implementer, any of which may vary.

In some implementations described herein, logic and similar implementations may include software or other control structures suitable to operation. Electronic circuitry, for example, may manifest one or more paths of electrical current constructed and arranged to implement various logic functions as described herein. In some implementations, one or more medias are configured to bear a device-detectable implementation if such media hold or transmit a special-purpose device instruction set operable to perform as described herein. In some variants, for example, this may manifest as an update or other modification of existing software or firmware, or of gate arrays or other programmable hardware, such as by performing a reception of or a transmission of one or more instructions in relation to one or more operations described herein. Alternatively, or additionally, in some variants, an implementation may include special-purpose hardware, software, firmware components, and/or general-purpose components executing or otherwise controlling special-purpose components. Specifications or other implementations may be transmitted by one or more instances of tangible or transitory transmission media as described herein, optionally by packet transmission or otherwise by passing through distributed media at various times.

Alternatively, or additionally, implementations may include executing a special-purpose instruction sequence or otherwise operating circuitry for enabling, triggering, coordinating, requesting, or otherwise causing one or more occurrences of any functional operations described above. In some variants, operational or other logical descriptions herein may be expressed directly as source code and compiled or otherwise expressed as an executable instruction sequence. In some contexts, for example, C++ or other code sequences can be compiled directly or otherwise implemented in high-level descriptor languages (e.g., a logic-synthesizable language, a hardware description language, a hardware design simulation, and/or other such similar modes of expression). Alternatively or additionally, some or all of the logical expression may be manifested as a Verilog-type hardware description or other circuitry model before physical implementation in hardware, especially for basic operations or timing-critical applications. Those skilled in the art will recognize how to obtain, configure, and optimize suitable transmission or computational elements, material supplies, actuators, or other common structures in light of these teachings.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those having ordinary skill in the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a USB drive, a solid state memory device, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

In a general sense, those skilled in the art will recognize that the various aspects described herein which can be implemented, individually and/or collectively, by a wide range of hardware, software, firmware, and/or any combination thereof can be viewed as being composed of various types of "electrical circuitry." Consequently, as used herein "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of memory (e.g., random access, flash, read-only, etc.)), and/or electrical circuitry forming a communications device (e.g., a modem, communications switch, optical-electrical equipment, etc.). Those having ordinary skill in the art will recognize that the subject matter described herein may be implemented in an analog or digital fashion or some combination thereof.

Those skilled in the art will recognize that at least a portion of the devices and/or processes described herein can be integrated into a data processing system. Those having ordinary skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

In certain cases, use of a system or method as disclosed and claimed herein may occur in a territory even if components are located outside the territory. For example, in a distributed computing context, use of a distributed computing system may occur in a territory even though parts of the system may be located outside of the territory (e.g., relay, server, processor, signal-bearing medium, transmitting computer, receiving computer, etc. located outside the territory).

A sale of a system or method may likewise occur in a territory even if components of the system or method are located and/or used outside the territory.

Further, implementation of at least part of a system for performing a method in one territory does not preclude use of the system in another territory.

All of the above U.S. patents, U.S. patent application publications, U.S. patent applications, foreign patents, foreign patent applications and non-patent publications referred to in this specification and/or listed in any Application Data Sheet, are incorporated herein by reference, to the extent not inconsistent herewith.

One skilled in the art will recognize that the herein described components (e.g., operations), devices, objects, and the discussion accompanying them are used as examples for the sake of conceptual clarity and that various configuration modifications are contemplated. Consequently, as used herein, the specific examples set forth and the accompanying discussion are intended to be representative of their more general classes. In general, use of any specific example is intended to be representative of its class, and the non-inclusion of specific components (e.g., operations), devices, and objects should not be taken to be limiting.

With respect to the use of substantially any plural and/or singular terms herein, those having ordinary skill in the art can translate from the plural to the singular or from the singular to the plural as is appropriate to the context or application. The various singular/plural permutations are not expressly set forth herein for sake of clarity.

The herein described subject matter sometimes illustrates different components contained within, or connected with, different other components. It is to be understood that such depicted architectures are presented merely as examples, and that in fact many other architectures may be implemented which achieve the same functionality. In a conceptual sense, any arrangement of components to achieve the same functionality is effectively "associated" such that the desired functionality is achieved. Therefore, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of "operably couplable" include but are not limited to physically mateable or physically interacting components, wirelessly interactable components, wirelessly interacting components, logically interacting components, or logically interactable components.

In some instances, one or more components may be referred to herein as "configured to," "configurable to," "operable/operative to," "adapted/adaptable," "able to," "conformable/conformed to," etc. Those skilled in the art will recognize that "configured to" can generally encompass active-state components, inactive-state components, or standby-state components, unless context requires otherwise.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true spirit and scope of the subject matter described herein. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such a recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having ordinary skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having ordinary skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flows are presented as sequences of operations, it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Claims**

1. A distributed intrusion detection system for resource-constrained IoT devices, comprising:
   one or more network sensors configured to collect network traffic data from monitored IoT devices;

   one or more intrusion detection agents, each agent being deployed on a respective monitored IoT device and configured to perform local anomaly detection on data collected by the network sensors;

an intrusion detection proxy configured to receive anomaly notifications from the one or more intrusion detection agents and perform system-wide anomaly correlation across multiple monitored IoT devices; and

rules logic distributed across the one or more intrusion detection agents and the intrusion detection proxy, wherein the rules logic is executed within a sandboxed execution environment that is isolated from operating system resources of the monitored IoT devices;

wherein the sandboxed execution environment restricts the rules logic from direct access to kernel-level functions and memory spaces of the monitored IoT devices, thereby enabling dynamic updating of the rules logic independently of core system software while maintaining safety certification requirements for the monitored IoT devices..

2. The distributed intrusion detection system architecture of claim 1, wherein the rules logic includes both network anomaly detection logic and host anomaly detection logic.

3. The distributed intrusion detection system architecture of claim 1, wherein the one or more intrusion detection agents and the intrusion detection proxy are configured to provide centralized, dynamic rules updates.

4. The distributed intrusion detection system architecture of claim 1, wherein the rules logic is configured to be executed within a virtual computing environment.

5. The distributed intrusion detection system architecture of claim 4, wherein the rules logic is hardware-agnostic and operating-system-agnostic.

6. The distributed intrusion detection system architecture of claim 1, wherein the rules logic is configured to be executed within a restricted operating system environment.

7. The distributed intrusion detection system architecture of claim 1, wherein the restricted operating system environment comprises a sandbox.

8. The distributed intrusion detection system architecture of claim 1, wherein the rules logic is decoupled from the one or more network sensors, the one or more intrusion detection agents, and the intrusion detection proxy.

9. The distributed intrusion detection system architecture of claim 1, wherein the one or more intrusion detection agents and the intrusion detection proxy comprise an intrusion detection system core that is platform agnostic.

10. The distributed intrusion detection system architecture of claim 1, further comprising:
a layered communications stack that is agnostic to the network architecture of any monitored system.

11. The distributed intrusion detection system architecture of claim 1, further comprising:
one or more generic application program interfaces.

12. The distributed intrusion detection system architecture of claim 1, further comprising:
one or more generic abstraction layers that are agnostic to platform-dependent implementation functions.

13. The distributed intrusion detection system architecture of claim 12, wherein the one or more generic abstraction layers are agnostic to at least one of:

a) a network storage implementation;
b) a power management implementation;
c) a network health monitoring implementation; or
d) a network diagnostics implementation.

14. A distributed intrusion detection method comprising:

a) accepting data via one or more sensing nodes;
b) performing anomaly detection on the data via one or more intrusion detection agents;
c) accepting one or more notifications of at least one anomaly from the one or more intrusion detection agents via an intrusion detection proxy; and

d) applying rules logic distributed across the one or more intrusion detection agents and the intrusion detection proxy;

wherein the rules logic is configured to be executed within an isolated computing environment.

15. The method of claim 14, wherein the data is accepted from at least one of an electronic control unit, a network bus, an Ethernet switch, an operating system, a hypervisor, a virtual machine, or an application.

16. The method of claim 14, further comprising:
providing centralized, dynamic rules updates via the one or more intrusion detection agents and the intrusion detection proxy.

17. The method of claim 14, further comprising:
dynamically configuring anomaly detection algorithm parameters.

18. The method of claim 14, further comprising:
dynamically updating detection rules logic implemented in a script interpreter.

19. The method of claim 14, wherein the rules logic comprises host detection rules, network detection rules, and correlating rules logic.

20. A non-transitory computer program product comprising instructions, which when executed by one or more processors, cause the one or more processors to:

a) accept data via one or more sensing nodes;
b) perform anomaly detection on the data via one or more intrusion detection agents;
c) accept one or more notifications of at least one anomaly from the one or more intrusion detection agents via an intrusion detection proxy; and
d) apply rules logic distributed across the one or more intrusion detection agents and the intrusion detection proxy;
wherein the rules logic is configured to be executed within an isolated computing environment.

Distributed IDS Core

FIG. 1

EP 4 787 206 A1

# Automotive Use Case

IDS Sensors

Identify security events on host, network and CAN level

In-Vehicle Distributed IDS

Collects qualified security events, performs pre-analysis and communicates with Backend

Backend Analytics Platform

Analyze the fleet level data for suspicious cyber security events

ECU

IDS Sensors

IDS Agent

Main ECU

IDS Sensors

IDS Agent

IDS Proxy

Rules Updates

Alerts

Security Events

ECU

IDS Sensors

IDS Agent

CAN/Host/Network/

FIG. 2

EP 4 787 206 A1

# Combined Host and Network Anomaly Detection Logic

FIG. 3A

| IDS Type | Attack Examples | Anomalies Examples |
|---|---|---|
| HIDS | • DoS<br>• Privilege escalation<br>• Control flow hijacking<br>• Access to restricted resources<br>• Installing malware | • Process crash<br>• Anomalous system logs<br>• Access control violations<br>• Excessive memory and CPU usage |
| NIDS | • DoS (message flooding)<br>• Message spoofing<br>• Firewall circumvention<br>• ARP poisoning<br>• Brute force secure connection<br>• Port scanning | • Firewall rules violation<br>• IP-to-MAC association violation<br>• Network errors signaling (ICMP, TCP/IP)<br>• Diagnostics protocols anomalies (DoIP/UDS) |
| CIDS | • DoS (message flooding)<br>• Message spoofing by rogue ECU | • Timing anomalies<br>• CANID blacklist violations<br>• Diagnostics protocols anomalies (UDS)<br>• Payload anomalies |

FIG. 3B

EP 4 787 206 A1

# Rule Types and Rule Chains

Rules logic is distributed across the chain of IDS Agents and Proxy:

- Exclusive rules are triggered directly by sensors or by other rules.
- Inclusive rules are complex rules constituting a chain of Exclusive and/or other Inclusive rules concatenated by a logical 'AND' operator.

Example:

$$R_i = r_x \ AND \ r_y$$

$$R_j = r_a \ AND \ r_b \ AND \ R_i$$

According to this example, the *Inclusive* rule $R_j$ is evaluated only if all *Excusive* rules $r_a$, $r_b$, $r_x$ and $r_y$ are evaluated. Rule $r_a$ will be executed immediately upon reception of an event from the corresponding sensor. Rule $r_b$ will be triggered only if rule $r_a$ was evaluated, and so on.

$$R_i = r_1 \ AND \ r_2 \ AND \ r_3 \ AND \ r_4$$

FIG. 4

# IDS Agent Deployment on a Single ECU

FIG. 5

# Platform Agnostic Abstraction Layer

**IDS Core**

**Abstraction Layer**

| Network Abstraction | Storage Abstraction | Power Management Abstraction | Health Monitor Abstraction | Logging Abstraction |

**Actual Implementation**

| Network Subsystem | Storage Subsystem | Power Management | Health Monitor Subsystem | Logging Subsystem |

FIG. 6

EP 4 787 206 A1

# IDS Layered Communication Stack

FIG. 7

EP 4 787 206 A1

# EUROPEAN SEARCH REPORT

**Application Number**

EP 26 15 4706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 512 179 A1 (CARRIER CORP [US]) 17 July 2019 (2019-07-17) * paragraph [0008] * * paragraph [0036] - paragraph [0041] * * paragraph [0043] - paragraph [0044] * | 1-20 | INV. G06F21/55 H04L9/40 ADD. H04L67/12 |
| Y | US 2019/297118 A1 (HAUGSNES ANDREAS SEIP [US]) 26 September 2019 (2019-09-26) * paragraph [0036] * * paragraph [0038] * * paragraph [0042] * * paragraph [0047] * * paragraph [0050] * * paragraph [0052] * * paragraph [0070] * * paragraph [0100] * * paragraph [0166] - paragraph [0167] * | 1-20 | |
| A | MISHRA PREETI ET AL: "Intrusion detection techniques in cloud environment: A survey", JOURNAL OF NETWORK AND COMPUTER APPLICATIONS ACADEMIC PRESS, NEW YORK, NY,, US, vol. 77, 20 October 2016 (2016-10-20), pages 18-47, XP029805783, ISSN: 1084-8045, DOI: 10.1016/J.JNCA.2016.10.015 * page 1 - page 7 * | 1-20 | TECHNICAL FIELDS SEARCHED (IPC) G06F H04L |
| A | EP 4 495 815 A1 (HONEYWELL INT INC [US]) 22 January 2025 (2025-01-22) * paragraph [0001] * * paragraph [0004] - paragraph [0008] * * paragraph [0010] * * paragraph [0014] * * paragraph [0025] - paragraph [0027] * | 1-20 | |

The present search report has been drawn up for all claims

| Place of search | Date of completion of the search | Examiner |
|---|---|---|
| Munich | 22 May 2026 | Barla Harter, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 4706

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | | Publication date | Patent family member(s) | | Publication date |
|---|---|---|---|---|---|
| EP 3512179 | A1 | 17-07-2019 | EP | 3512179 A1 | 17-07-2019 |
| | | | US | 2019222590 A1 | 18-07-2019 |
| US 2019297118 | A1 | 26-09-2019 | US | 8914406 B1 | 16-12-2014 |
| | | | US | 9038183 B1 | 19-05-2015 |
| | | | US | 9167001 B1 | 20-10-2015 |
| | | | US | 9756082 B1 | 05-09-2017 |
| | | | US | 10432674 B1 | 01-10-2019 |
| | | | US | 2016269427 A1 | 15-09-2016 |
| | | | US | 2019297118 A1 | 26-09-2019 |
| EP 4495815 | A1 | 22-01-2025 | EP | 4495815 A1 | 22-01-2025 |
| | | | US | 2025030720 A1 | 23-01-2025 |

EPO FORM P0459

For more details about this annex : see Official Journal of the European Patent Office, No. 12/82